# FASCICULE DE BREVET EUROPEEN

(11) **EP 2 279 087 B1**
(45) Date de publication et mention de la délivrance du brevet: **23.10.2013**
(21) Numéro de dépôt: 09731693.9
(22) Date de dépôt: 20.04.2009
(51) Int. Cl.: B60C 23/04

(54) **PROCEDE DE PRE-ALERTE POUR VEHICULE**
VERFAHREN ZUR FRÜHERKENNUNG EINER WARNUNG FÜR EIN FAHRZEUG
METHOD OF EARLY WARNING FOR VEHICLE

(30) Priorité: 18.04.2008 FR 0852635
(43) Date de publication de la demande: 02.02.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH); TRW Automotive U.S. LLC, Livonia, Michigan 48150 (US)
(72) Inventeur: LIBERGE, Franck, F-63830 Durtol (FR)
(74) Mandataire: Dequire, Philippe Jean-Marie Denis
(86) Numéro de dépôt international: PCT/EP2009/054644
(87) Numéro de publication internationale: WO 2009/127733

(56) Documents cités:
- EP-A- 1 184 208

## Description

La présente invention concerne un procédé de pré-alerte pour véhicule permettant de détecter une éventuelle condition de pré-alerte d'état de pression avant que cette condition ne nécessite une immobilisation immédiate du véhicule, et éventuellement en proposant au conducteur une solution lui permettant facilement et rapidement d'apporter les actions correctrices nécessaires (regonglage, dégonflage, réparation... du ou des pneumatiques affectés).

On connaît plusieurs exemples de dispositifs ou procédés utilisant des technologies « hybrides » comportant à la fois des moyens permettant de mesurer la pression des pneumatiques montés sur un véhicule, et des technologies de navigation, permettant de localiser et guider le véhicule le long d'un itinéraire donné.

Par exemple, le document GB2420415 décrit un dispositif comprenant à la fois un système de mesure et d'indication de la pression des pneumatiques, et un système de navigation de type « GPS ». Le système de détection permet de détecter une éventuelle condition de perte de pression lorsque le véhicule se déplace. Lorsque cette condition se produit, le système de navigation permet de localiser et d'afficher à l'écran la station de gonflage la plus proche. Il s'agit d'un dispositif qui fonctionne en temps réel : le système de mesure de pression donne une alerte au système de navigation, qui, en fonction de la position en temps réel, présente un ou plusieurs points d'intérêt relatifs à des stations de gonflage ou postes d'essence.

Le document EP1184208, en accord avec le préambule de la revendication 1, décrit un dispositif comprenant des moyens pour détecter les conditions de pression et une éventuelle condition de perte de pression d'un véhicule et des moyens de positionnement du véhicule. En cas de perte de pression lors du déplacement du véhicule, le dispositif détermine si le véhicule peut ou non se déplacer vers la station de gonflage ou de réparation la plus proche, en fonction d'une évaluation faite du taux de perte de pression du ou des pneumatiques ayant généré l'alerte. Il s'agit également d'un dispositif fonctionnant en temps réel.

En plus des aspects interactifs entre le système de mesure de pression des pneumatiques et le système de navigation, ce dispositif tient indirectement compte des paramètres de l'itinéraire entre le point de détection de perte de pression et le site de gonflage. Il ne s'agit toutefois pas de pré-alerte donnée avant le départ, en fonction d'un itinéraire global entre les points de départ et d'arrivée choisis par l'utilisateur.

Tous ces systèmes présentent des technologies fonctionnant en temps réel, après une perte de pression ayant provoqué une alerte. Il s'agit de situations critiques, dans lesquelles une intervention rapide est nécessaire, car le roulage en mode de pression dégradée ne peut se prolonger sans entraîner certains risques liés à l'inconfort, à la pénibilité de la conduite, au risque de détérioration prématurée du pneumatique concerné, voire au risque d'une perte de pression totale forçant le conducteur à immobiliser son véhicule.

Pour éviter ces inconvénients, l'invention prévoit tout d'abord un procédé de détermination de pré-alerte pour un véhicule destiné à effectuer un itinéraire quelconque, dans lequel :
- on prévoit des moyens de traitement de données disposant d'un module de test ;
- on prévoit des moyens permettant l'obtention, pour ledit véhicule, de données relatives à la pression pour au moins un des pneumatiques ;
- on fournit auxdits moyens de traitement de données lesdites données relatives à la pression;
- on fournit aux moyens de traitement de données un ensemble de critères permettant de détecter des conditions de pré-alerte d'état de pression,
- on fournit également aux moyens de traitement de données certaines caractéristiques physiques relatives à un itinéraire à effectuer ;
- lesdits critères permettant de détecter des conditions de pré-alerte d'état de pression prennent en compte d'une part lesdites données relatives à la pression et d'autre part lesdites caractéristiques physiques relatives à l'itinéraire établi ;
- de sorte que, sur la base dudit itinéraire établi, desdites données relatives à la pression et desdits critères de pré-alerte, on effectue, à l'aide des moyens de traitement des données, un test permettant de déceler une éventuelle condition de pré-alerte d'état de pression ;
- en cas de détection d'une condition de pré-alerte, on transmet un signal correspondant.

Ce procédé permet de produire une pré-alerte d'état de pression, avant le départ du véhicule en fonction de données liées à un itinéraire prévu et surtout avant qu'une situation critique se produise sur route, et donc avant une détection en temps réel classique.

Chaque type d'itinéraire comporte des caractéristiques physiques particulières et souvent distinctives. La présence de certaines caractéristiques physiques d'itinéraires a un impact direct sur les valeurs de pression de pneumatiques souhaitables afin d'optimiser les conditions de roulement telles que le confort, la sécurité, l'économie de carburant, etc. En fonction des données de l'itinéraire prévu, certaines caractéristiques clés peuvent être recherchées et détectées. En fonction de la présence ou non de certaines caractéristiques prédéfinies, une pré-alerte est donnée ou pas.

S'agissant d'une pré-alerte, donc donnée avant le départ du véhicule, contrairement aux dispositifs connus qui fonctionne en temps réel, le procédé selon l'invention peut fonctionner même sans dispositif de géolocalisation.

Selon un premier mode de réalisation avantageux :
- lesdites données relatives à la pression comprennent au moins une valeur de pression recommandée pour les pneumatiques du véhicule prévu pour effectuer l'itinéraire, une donnée relative à la présence ou non d'une fuite pour au moins un des pneumatiques du véhicule, et, en cas de fuite, la valeur du taux de perte de pression du pneumatique concerné et la valeur de pression mesurée à un instant donné (par exemple immédiatement avant ou un peu avant le départ) ;
- lesdites données relatives à un itinéraire à effectuer comprennent au moins la distance et/ou la durée prévus de l'itinéraire ; et
- on retrouve une condition de pré-alerte si une fuite est présente et si l'itinéraire prévu comporte une distance ou un temps de parcours suffisant pour permettre à la valeur de pression dudit pneumatique d'atteindre pendant la réalisation de l'itinéraire une valeur inférieure au seuil de pression minimum recommandé.

Selon un second mode de réalisation avantageux :
- les données relatives à la pression comprennent une donnée relative à la présence ou non d'une fuite pour au moins un des pneumatiques du véhicule prévu pour effectuer l'itinéraire ;
- lesdites données relatives à un itinéraire à effectuer comprennent au moins la valeur de la vitesse du tronçon le plus rapide de l'itinéraire ; et
- on retrouve une condition de pré-alerte si une fuite est présente et si l'itinéraire prévu comporte au moins une portion de trajet sur une route dont la vitesse de circulation est sensiblement élevée (par exemple, une vitesse égale ou supérieure à 80 km/h, et de préférence égale ou supérieure à 90 km/h).

Selon un troisième mode de réalisation avantageux :
- les données relatives à la pression comprennent des valeurs de pressions mesurées sur le véhicule à un instant donné (par exemple avant son départ), des données multiples de pressions recommandées pour les pneumatiques du véhicule en fonction de la vitesse dudit véhicule ;
- lesdites données relatives à un itinéraire à effectuer comprennent au moins la valeur de la vitesse du tronçon le plus rapide de l'itinéraire ; et
- on retrouve une condition de pré-alerte si l'itinéraire prévu comporte au moins une portion de trajet pour laquelle la valeur de pression recommandée est supérieure à la valeur (actuelle) mesurée pour au moins un des pneumatiques du véhicule prévu pour effectuer l'itinéraire.

On retrouve avantageusement une condition de pré-alerte si l'itinéraire prévu comporte au moins une portion de trajet pour laquelle la valeur de pression recommandée est supérieure à la valeur (actuelle) mesurée d'au moins une valeur de transition donnée (par exemple, la valeur de transition peut être de 5 ou 10 % de la valeur de la pression actuelle).

Selon un quatrième mode de réalisation avantageux :
- les données relatives à la pression comprennent une valeur de l'écart, à un instant donné (par exemple avant le départ du véhicule) entre les valeurs des pressions de deux pneumatiques d'un même essieu, au moins une valeur d'écart maximum EM donné (et accessoirement, les valeurs mesurées de pression des deux pneumatiques d'un même essieu) ;
- lesdites données relatives à un itinéraire à effectuer comprennent au moins la valeur de la vitesse du tronçon le plus rapide de l'itinéraire ; et
- on retrouve une condition de pré-alerte si l'écart établi est supérieur à une valeur d'écart maximum (EM) donné, et si l'itinéraire prévu comporte au moins une portion de trajet sur une route dont la vitesse de circulation est sensiblement élevée (de préférence supérieure à 80 km/h, et encore plus préférentiellement supérieure à 90 km/h).

De manière avantageuse, on utilise un dispositif mobile monté dans un véhicule et comportant un microprocesseur, ledit dispositif étant agencé pour recevoir lesdites données relatives à la pression, et, sur la base d'un itinéraire donné, d'effectuer un test de pré-alerte.

Il peut s'agir d'un dispositif de navigation, relié par liaison filaire ou hertzienne aux capteurs de pression des pneumatiques du véhicule, et susceptible d'analyser les valeurs de pression fournies par ces détecteurs, ou un dispositif de navigation relié à un système de mesure de la pression des pneumatiques équipant le véhicule. L'itinéraire peut être calculé par le dispositif de navigation lui-même, qui comprend alors un logiciel adapté à cette fonction, ou peut provenir d'une autre source.

Selon une variante avantageuse, on utilise un dispositif de calcul comportant un microprocesseur situé hors (ou à distance) du véhicule, ledit dispositif étant agencé pour recevoir lesdites données relatives à la pression, et, sur la base d'un itinéraire donné, d'effectuer un test de pré-alerte.

Il peut s'agir d'un micro-ordinateur situé dans un bâtiment. Des moyens de communication des données de type « wifi », « wimax » ou « Bluetooth » ou autre sont prévus de façon à relier un système de mesure de pression des pneumatiques équipant un véhicule et ledit micro-ordinateur. L'ordinateur reçoit les données relatives aux pressions des pneumatiques, et, sur la base d'un itinéraire donné, effectue un test de pré-alerte. L'itinéraire peut être calculé sur l'ordinateur lui-même, qui comprend alors un logiciel adapté à cette fonction, ou peut provenir d'une autre source, voisine ou à distance.

Le procédé de détermination de pré-alerte est avantageusement prévu pour utilisation avec un système de réseau routier numérique stocké sur un support mémoire et comportant une pluralité d'éléments de réseau tels que des noeuds et/ou tronçons et d'indications de positionnement de ces noeuds et/ou tronçons, lesdits éléments étant susceptibles d'une part d'être agencés dans une reconstitution d'un réseau routier de façon à former des portions de routes et des carrefours, et d'autre part de permettre de déterminer, à l'aide des moyens de traitement de données, au moins un itinéraire potentiel, susceptible de relier un point de départ D, et un point d'arrivée A.

Tous les détails de réalisation sont donnés dans la description qui suit, complétée par les figures 1 à 4 dans lesquelles :
- la figure 1 présente un organigramme fonctionnel illustrant de façon schématique les différentes étapes du procédé selon l' invention ;
- la figure 2 présente une représentation schématique du dispositif de pré-alerte selon l'invention ;
- la figure 3 illustre schématiquement un premier mode de réalisation du dispositif de pré-alerte ; et
- la figure 4 illustre schématiquement un second mode de réalisation du dispositif de pré-alerte.

Dans la présente description, les termes suivants sont utilisés notamment avec les significations suivantes :

On désigne « pré-alerte d'état de pression » ou « avertissement d'état de pression » ou « condition de pré-alerte de risque lié aux paramètres de pression et à l'itinéraire prévu» ou « pré-alerte d'état de pression défavorable » ou « pré-alerte » un état dans lequel au moins deux seuils différents de paramètres techniques et/ou physiques sont atteints ou dépassés et/ou deux conditions sont remplies. Un de ces paramètres est relié directement ou indirectement à la pression de gonflage ou plus simplement la pression d'au moins un des pneumatiques du véhicule prévu pour effectuer un itinéraire pour lequel la condition de pré-alerte est à vérifier. Le ou les autres paramètres sont reliés à l'itinéraire prévu. En mode de pré-alerte, les pneumatiques du véhicule sont dans un état permettant un roulage dans des conditions adéquates, dans certaines limites, selon les cas. Si le paramètre lié à la pression venait à se détériorer au-delà d'un seuil critique, la condition de pré-alerte pourrait être remplacée par une condition d'« alerte de sous-gonflage ».

On désigne « alerte de sous-gonflage » ou « condition d'alerte de sous-gonflage » une condition dans laquelle la pression d'au moins un des pneumatiques du véhicule présente une valeur inférieure à un seuil de tolérance donné. Ce seuil peut être fixé en fonction de différents critères, tels que le confort, la sécurité, la tenue de route, etc. Ce niveau d'alerte nécessite une intervention immédiate du conducteur s'il est en cours de roulage, pour remédier à la situation.

On désigne « système ou dispositif ou module de calcul d'itinéraire » ou « système ou module de guidage » un dispositif comportant un seul ou plusieurs éléments matériels tels qu'un processeur, des accès à des moyens mémoire ou une base de données et permettant de fournir à un utilisateur les indications de guidage ou de conduite permettant à ce dernier de circuler avec son véhicule et d'accomplir un itinéraire souhaité en suivant les instructions de guidage fournies par ledit système. Un tel dispositif est en général doté des moyens processeurs lui permettant de déterminer un itinéraire entre un point de départ D et un point d'arrivée A.

On désigne « système ou dispositif ou module de géolocalisation ou de positionnement » un dispositif permettant de recevoir une ou plusieurs informations qui permettent directement ou par calcul de déterminer avec précision la position du dispositif selon des coordonnées de latitude/longitude ou cartésiennes. Le plus connu de ces systèmes est le système « GPS », de l'anglais « Global Positioning System» ou système de positionnement mondial. Ce système fonctionne avec un ensemble de satellites fournissant aux récepteurs des informations permettant le calcul (par trilatération) de leurs propres coordonnées. Le GPS est classiquement utilisé pour localiser des véhicules roulants, des avions, des navires, etc.

On désigne « système de mesure et de gestion de la pression de pneus » ou « système de surveillance de pression », souvent désigné par son abréviation anglaise « TPMS » pour « Tire Pressure Management System », un système permettant au moins, de recueillir les valeurs de pression des pneumatiques d'un véhicule et de fournir une « sortie » par exemple sous la forme d'une information liée à ces valeurs. Cette sortie peut être une alerte due à une situation de sous-gonflage, une information sur les valeurs de pression présentes dans les pneus, une alerte informant qu'une fuite a été détectée, etc. Un système TPMS peut fonctionner de façon indépendante ou être relié à d'autres équipements d'un véhicule, comme par exemple un écran permettant d'afficher les différents états et alertes.

On désigne « données relatives à un itinéraire » les données qui découlent de l'itinéraire, telles que le temps et la longueur de parcours, la vitesse sur les différents tronçons, etc., et les données qui permettent de définir l'itinéraire, telles que les points de passage qui seront empruntés (les noeuds, les tronçons, les points d'intérêts, etc.) et éventuellement les instructions de guidage correspondant à cet itinéraire.

On désigne « données relatives à la pression » les données telles que les valeurs absolues de pression des pneumatiques et les valeurs qui sont reliées directement ou indirectement à la pression telles que la présence d'une fuite, le taux de perte de pression, etc.

On désigne « écart maximum » (EM) la plus grande valeur acceptable de différence de pression entre deux pneumatiques d'un même essieu. Pour un véhicule de tourisme typique, cette valeur se situe par exemple entre 100 et 200 mbar, et de préférence entre 150 et 200 mbar.

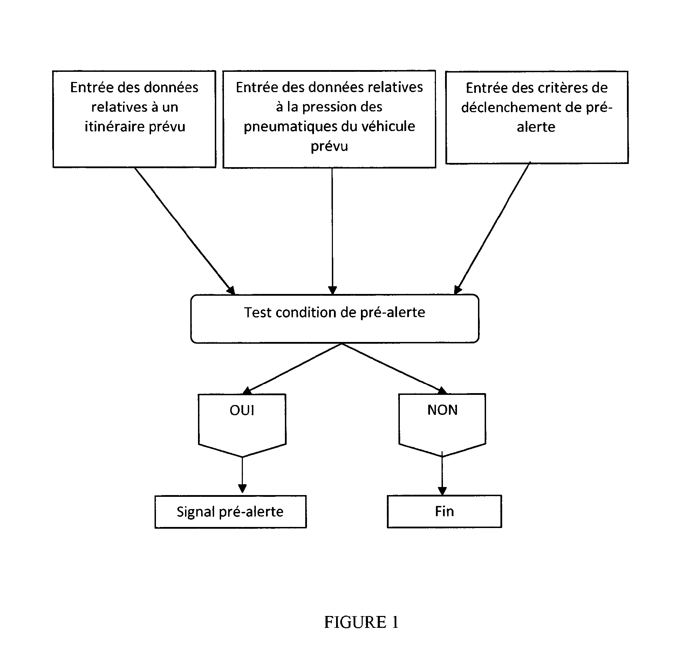

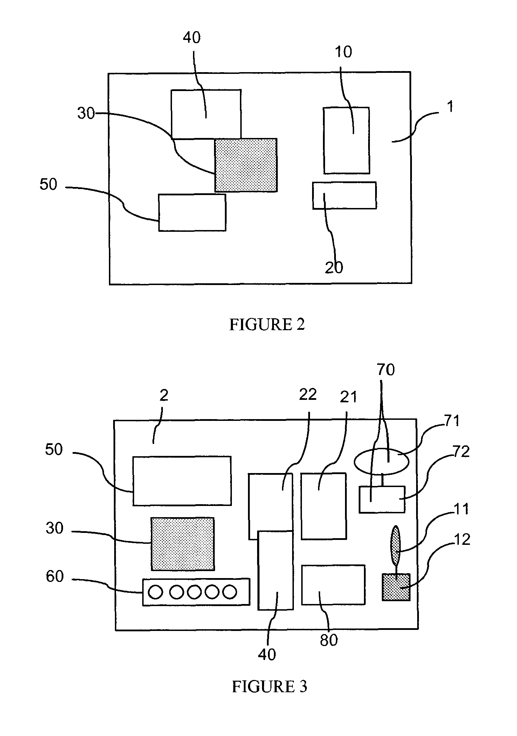

La figure 2 montre une représentation schématique d'un dispositif de pré-alerte 1 pour véhicule selon l'invention. Il comporte une entrée 10 ou accès à des données relatives à la pression en provenance d'au moins un pneumatique d'un véhicule prévu pour effectuer ledit itinéraire, une source 20 ou accès à des données relatives à un itinéraire. Il peut s'agir d'une source externe ou un module de calcul d'itinéraires prévu au sein du dispositif de pré-alerte. Un module de test 30, ayant accès d'une part aux données relatives à un itinéraire prévu et d'autre part aux données relatives à la pression d'au moins un pneumatique du véhicule prévu pour effectuer cet itinéraire, permet de détecter une éventuelle condition de pré-alerte. Le module de test peut comporter un microprocesseur ou autre moyen de calcul, ainsi que des instructions ou commandes de tests. Les paramètres de test 40, stockés dans le dispositif, ou fournis avant d'effectuer un test, permettent de configurer le module de test de façon à ce que ce dernier puisse identifier les cas où une condition de pré-alerte est présente ou non. La figure 1, décrite ultérieurement, permet d'illustrer le principe de fonctionnement du module de test.

En cas de condition de pré-alerte, une sortie 50 de pré-alerte permet l'obtention d'un signal correspondant. Ce signal peut servir à envoyer un message à l'utilisateur, par l'entremise d'un signal visuel ou sonore, ou même grâce à l'envoi d'un message complet. Un tel message peut par exemple expliquer les conditions ayant permis de générer un mode de pré-alerte, et éventuellement comporter un volet présentant des moyens de corriger la situation. Par exemple, le message peut suggérer à l'utilisateur de se rendre à une station de gonflage identifiée avant d'effectuer l'itinéraire prévu. Un module de calcul d'itinéraire, interne ou externe, peut prendre en compte la condition de pré-alerte pour proposer un itinéraire jusqu'à cette station, soit par modification de l'itinéraire initialement prévu, soit pour proposer un itinéraire indépendant, destiné à diriger le véhicule jusqu'à une station de gonflage. Les moyens de traitement du signal de la sortie 50 de pré-alerte, les moyens d'affichage, et autres éléments permettant de telles fonctions peuvent être prévus à l'extérieur du dispositif de pré-alerte 1. Une liaison filaire ou hertzienne permet alors les transferts de données.

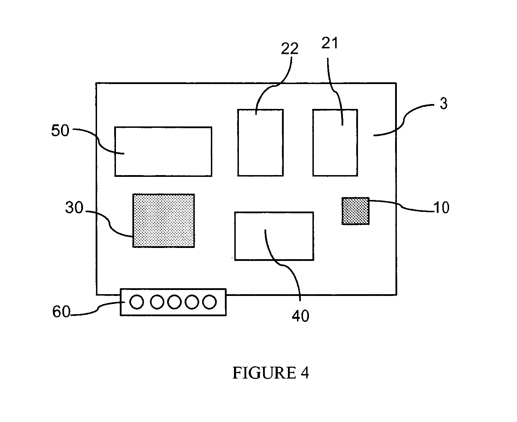

Le dispositif de pré-alerte présenté à la figure 2 se décline avantageusement en deux principaux modes de réalisation. Les figures 3 et 4 présentent des exemples de réalisation de ces deux modes, à savoir un mode mobile, présenté à la figure 3, et un mode fixe, ou hors véhicule, présenté à la figure 4.

La figure 3 illustre une représentation schématique d'un dispositif 2 de pré-alerte en version mobile ou montée dans le véhicule. Ce mode de réalisation permet d'intégrer le dispositif de façon permanente ou non dans le véhicule prévu pour effectuer l'itinéraire. Un module de géolocalisation 70 (optionnel) pourvu d'une antenne 71 et d'un module de traitement 72 permet de situer le véhicule dans un système de cartographie numérique. Un module 21 de calcul d'itinéraires, qui comprend un logiciel adapté à cette fonction, et une base de données cartographiques 22 permettent d'effectuer des calculs d'itinéraires. Un module 12 de traitement de signal de pression relié à une antenne 11 de réception d'un signal de pression de pneumatiques permet de recevoir et de traiter les données relatives à la pression d'au moins un pneumatique du véhicule. Le module de test 30, les paramètres de test 40, la sortie 50 de pré-alerte permettent la mise en oeuvre telle que présentée préalablement pour le dispositif de la figure 2. Une interface utilisateur 60 permet au conducteur du véhicule de paramétrer le dispositif, d'entrer d'éventuelles données, telles que les informations nécessaires pour élaborer un calcul d'itinéraire, et de recevoir les données et messages résultant. Une source d'alimentation électrique 80, autonome ou reliée au circuit électrique du véhicule, permet de fournir l'énergie utile pour le fonctionnement du dispositif de pré-alerte.

Selon une variante de réalisation, les données relatives à l'itinéraire peuvent provenir d'une autre source, par exemple un serveur centralisé, effectuant une pluralité de calculs d'itinéraires distincts destinés à différents utilisateurs et transmis par exemple par téléphonie cellulaire, ou encore d'un module de calcul d'itinéraire situé dans le véhicule, mais séparément du dispositif de pré-alerte 2.

La figure 4 présente un mode de réalisation du dispositif de pré-alerte 3 en mode fixe ou hors véhicule. Un tel dispositif est avantageusement mis en oeuvre à l'aide d'un ordinateur, installé hors du véhicule, à proximité ou non de ce dernier. Une entrée 10 de données relatives à la pression des pneumatiques du véhicule permet l'obtention, en temps réel ou différé, des diverses données relatives à la pression d'au moins un des pneumatiques du véhicule. La réception peut être effectuée par liaison directe entre le véhicule et le dispositif 3, par exemple par voie hertzienne, ou par liaison indirecte, comme par exemple par téléphonie cellulaire, par Internet, ou tout autre type de réseau public ou privé d'échange de données.

Les autres modules du dispositif sont similaires à ceux présentés préalablement pour la version mobile de la figure 3, à l'exception du module de géolocalisation 70, qui n'est pas présent sur la version fixe. A la figure 4, les différents modules peuvent être matérialisés par les éléments conventionnels d'un micro-ordinateur. Par exemple, le module de test 30 est mis en oeuvre par un microprocesseur et les instructions spécifiquement adaptées sont avantageusement fournies par un logiciel spécifiquement conçu. Les données de cartographie numérique 22, les paramètres de test 40, et toute autre donnée utile, sont prévues dans des moyens mémoires internes ou externes à l'ordinateur. L'interface utilisateur 60 est matérialisée par les périphériques d'un ordinateur tels que le clavier, l'écran, les entrées et sorties, la souris ou autre dispositif de déplacement du curseur de l'écran, les haut-parleurs, etc. Les données relatives à l'itinéraire peuvent être obtenues sur l'ordinateur lui-même, qui comprend alors un logiciel adapté à cette fonction, ou peuvent provenir d'une autre source, voisine ou à distance.

Dans l'un ou l'autre mode de réalisation mobile ou fixe, les données relatives à la pression proviennent avantageusement d'un système de mesure et de gestion de la pression. Ce type de système est habituellement pourvu de capteurs de pression installés dans les roues ou dans les pneumatiques du véhicule. Les données relatives à la pression sont transmises par onde radio, soit de façon continue, soit à intervalles réguliers, ou encore lors d'une détection d'une variation brusque de la pression. Un récepteur et une unité centrale de calcul permettent la réception et le traitement des données. Le résultat de ce traitement peut servir à émettre des informations au conducteur, soit sous forme sonores, et/ou sous forme visuelle. A cet effet, de nombreux systèmes de surveillance de pression sont reliés à un afficheur qui peut être dédié à cette fonction ou un afficheur servant à présenter différents types de paramètres du véhicule et/ou de son environnement. Ce dernier cas est courant lorsque le système de surveillance de la pression est fourni en équipement d'origine.

De tels systèmes de surveillance de la pression peuvent aussi être fournis en accessoire. Ils peuvent dans ce cas venir équiper n'importe quel type de véhicule. Une unité de réception et de traitement des ondes radio est alors installée à l'intérieur de l'habitacle.

La figure 1 illustre les étapes clés de la mise en oeuvre du procédé et du dispositif selon l'invention. Tout d'abord, les différentes données, en provenance des différentes sources, sont reçues : les données relatives à un itinéraire prévu, les données relatives à la pression des pneumatiques du véhicule prévu pour effectuer l'itinéraire et les données relatives aux critères de déclenchement de pré-alerte, si celles-ci ne sont pas préalablement présentes dans le dispositif.

Selon un mode de réalisation avantageux, ces dernières données peuvent être prévues de façon permanente, et l'utilisateur n'a pas à s'en préoccuper. Selon une variante de réalisation, ces données peuvent être fournies par l'utilisateur, par exemple à l'aide d'un menu prévu sur l'interface utilisateur proposant différents choix en fonction de différents contextes d'utilisation du véhicule, ou en fonction du type de véhicule prévu.

Une fois les données disponibles, le module de test peut effectuer le ou les tests nécessaires pour détecter une éventuelle condition de pré-alerte.

Pour la mise en oeuvre du procédé et du dispositif selon l'invention, différents paramètres sont à considérer. Tout d'abord, au niveau des paramètres relatifs à la pression, en plus des valeurs absolues de pression pour chacun des pneumatiques, la connaissance de la présence d'une fuite, des éventuels multiples niveaux de pression recommandée en fonction de la vitesse, ainsi que l'écart de pression entre deux pneumatiques positionnés sur un même essieu, sont utiles pour déterminer certains cas de pré-alerte.

Les multiples informations relatives à la pression des pneumatiques peuvent être obtenues par un système de mesure et de gestion de la pression de pneus.

Avec ou sans système de mesure et de gestion de la pression, les grandeurs utiles sont des données reliées ou des données dépendant de la pression, désignées ici « données relatives à la pression ». Il s'agit notamment des données suivantes :
- la valeur de pression réelle ou actuelle d'au moins un des pneumatiques du véhicule prévu pour effectuer l'itinéraire, la mesure étant effectuée de préférence à une heure voisine de l'heure prévue du départ ;
- la ou les seuils de pressions recommandées : il s'agit en général des valeurs de pression indiquées par le constructeur du véhicule ;
- la présence ou pas d'une fuite : un système de mesure et de gestion de la pression des pneus est en mesure d'effectuer plusieurs mesures de la valeur de la pression espacées dans le temps. Cette caractéristique permet au système de suivre l'évolution de la valeur de pression en fonction du temps. En comparant cette évolution à des valeurs préétablies de seuil de fuite, la présence de fuites peut être décelée. Par exemple, une fuite de l'ordre d'environ 100 mbar/mois peut être décelée avec une grande fiabilité. Ce type de fuite est souvent qualifié de fuite « lente », puisqu'elle permet, dans certaines limites, l'utilisation du véhicule. Tant que la quantité totale d'air échappée n'excède pas un certain seuil, la pression du pneumatique peut se trouver dans une plage d'utilisation convenable. Après un certain temps, la valeur de pression se situe en deçà de la valeur de pression recommandée, et le système de mesure et de gestion de la pression peut émettre un signal d'alerte. A ce stade, même s'il s'agit d'une fuite « lente », une action correctrice doit être entreprise très rapidement. Des fuites plus importantes peuvent évidemment aussi être détectées. On qualifie souvent de fuite « rapide » une fuite de l'ordre de 100 mbar/h ou plus.
- la présence d'un déséquilibre de pression sur un même essieu : le système de mesure et de gestion de la pression des pneus mesure et compare les valeurs de pression des pneumatiques d'un même essieu. Au-delà d'un certain écart entre les deux valeurs, par exemple pour des valeurs d'écart de l'ordre de 150 à 200 mbar ou plus, il est souhaitable de pouvoir éviter d'utiliser le véhicule dans certaines conditions, notamment à des vitesses élevées. Il est à noter que dans un tel cas de figure, les valeurs de pression des pneumatiques concernés peuvent, pour un seul ou même pour les deux pneumatiques, se situer dans les limites de pression recommandées.

En ce qui concerne l'itinéraire, certains paramètres sont susceptibles d'être utiles, tels que la distance à parcourir et/ou la durée du trajet (ces deux paramètres étant directement reliés), la vitesse maximale rencontrée le long de l'itinéraire. Ainsi, selon le cas considéré, au moins un de ces paramètres devra être disponible. Si toutes les données de l'itinéraire sont disponibles, les données utiles pourront alors être isolées du reste.

Selon l'invention, quatre cas types découlent de ces informations : les deux premiers cas se basent sur une détection dans la durée d'une fuite sur au moins un des pneumatiques et sur certaines caractéristiques d'un itinéraire à effectuer.

Le troisième cas se base sur des valeurs de seuil de pression recommandée évoluant en fonction de la vitesse de roulage du véhicule.

Le quatrième cas se base sur la détection d'un déséquilibre des valeurs de pression pour les pneumatiques d'un même essieu.

Le tableau 1 présente les principaux cas rencontrés. Ces cas seront décrits plus en détails dans ce qui suit.

**Tableau 1 : différents cas types en fonction des paramètres liés à l'itinéraire et des paramètres liés à la pression ; pour chaque cas, les paramètres spécifiques à connaître sont également mentionnés.**

| Paramètres | Présence d'une fuite | Niveau de pression recommandée en fonction de la vitesse | ΔP pneumatiques sur un même essieu |
|---|---|---|---|
| Longueur/durée itinéraire suffisant pour atteindre valeur de pression < pression recommandée | Cas 1 | | |
| | Taux de perte de pression | | |
| Vitesse maximum autorisée sur le tronçon le plus rapide de l'itinéraire | Cas 2 | Cas 3 | Cas 4 |
| | Vitesse limite pour pré-alerte | valeur des multiples pressions recommandées fonction de la vitesse | ΔP maximum admis en fonction de la vitesse |

En ce qui concerne le premier cas, la valeur de la pression peut être supérieure au seuil minimum recommandé, ou légèrement inférieure. En revanche, il y a une fuite de gaz de gonflage sur au moins un pneumatique. De manière classique, avec un système de surveillance de pression de type connu, ce type de situation ne donne lieu à aucune alerte. Cette situation n'est toutefois pas satisfaisante puisque, après un certain temps, la valeur de la pression se situera à un niveau inacceptable, contraignant le conducteur à envisager une action correctrice, voire à immobiliser son véhicule.

Selon l'invention, si une telle fuite est décelée par exemple par le système de mesure et de gestion de la pression et qu'un itinéraire prévoit un trajet de sorte qu'il est probable que le seuil de sous-gonflage soit atteint ou dépassé pendant le déroulement de l'itinéraire, le mode pré-alerte est activé. Pour effectuer les tests relatifs à ce premier cas, les données relatives à la pression doivent comporter au moins les informations suivantes : au moins une valeur de pression recommandée pour les pneumatiques du véhicule prévu pour effectuer l'itinéraire, une donnée relative à la présence ou non d'une fuite pour au moins un des pneumatiques du véhicule, et, en cas de fuite, la valeur du taux de perte de pression du pneumatique concerné et la valeur de pression réelle ou actuelle mesurée à un instant donné, de préférence le plus près possible du moment du départ.

Les données relatives à un itinéraire à effectuer doivent pour leur part comporter au moins les informations suivantes : au moins la distance et/ou la durée prévue de l'itinéraire.

Enfin, selon ce premier cas, le test permet de vérifier qu'on retrouve une condition de pré-alerte si une fuite est présente et si l'itinéraire prévu comporte une distance ou un temps de parcours suffisant pour permettre à la valeur de pression dudit pneumatique d'atteindre pendant la réalisation de l'itinéraire une valeur inférieure au seuil de pression minimum recommandé.

Le risque sous-jacent à ce premier cas consiste en ce que le pneumatique comportant une fuite se retrouve en état de sous-gonflage pendant que le véhicule parcours l'itinéraire prévu. C'est un premier cas de risque lié aux paramètres de pression et à l'itinéraire prévu. En effet, si l'itinéraire est modifié pour un itinéraire sensiblement plus court, ce risque pourrait être réduit ou éliminé.

Dans le second cas, une fuite doit également avoir été décelée. La présence d'une fuite implique une probabilité importante qu'un objet intrusif demeure toujours enfoncé dans le pneumatique, le plus souvent dans la bande de roulement. Un roulage à vitesse sensiblement élevée avec la présence de cet objet risquerait de provoquer une éjection de ce dernier. Cela aurait pour effet de libérer l'orifice créé par cet objet lorsqu'il a pénétré à travers le pneumatique, ce qui entraînerait un dégonflage du pneumatique en quelques instants (secondes ou minutes, selon les cas, en fonction notamment de la surface de l'ouverture).

Ainsi, pour alerter le conducteur qu'il se trouve dans une situation à risque, si un itinéraire comporte une portion avec vitesse sensiblement élevée (par exemple supérieure à 80 km/h, voire 90 ou même 110 km/h) le mode pré-alerte est activé.

Pour effectuer les tests relatifs à ce deuxième cas, les données relatives à la pression doivent comporter au moins les informations suivantes : une donnée relative à la présence ou non d'une fuite pour au moins un des pneumatiques du véhicule prévu pour effectuer l'itinéraire.

Les données relatives à un itinéraire à effectuer doivent pour leur part comporter au moins les informations suivantes : la valeur de la vitesse du tronçon le plus rapide de l'itinéraire.

Enfin, selon ce second cas, le test permet de vérifier qu'on retrouve une condition de pré-alerte si une fuite est présente et si l'itinéraire prévu comporte au moins une portion de trajet sur une route dont la vitesse de circulation est sensiblement élevée (par exemple, une vitesse égale ou supérieure à 80 km/h, et de préférence égale ou supérieure à 90 km/h, ou même plus).

Le conducteur prévenu par une telle pré-alerte peut vérifier si un objet perforant est toujours présent sur le pneumatique. Si tel est le cas, la solution la plus sage consiste à retirer cet objet et effectuer la réparation correspondante sur le pneumatique.

Le risque sous-jacent à ce cas consiste en ce que le pneumatique comportant une fuite se retrouve en état de sous-gonflage, voire de perte de pression sensiblement brutale ou totale, pendant que le véhicule parcours l'itinéraire prévu. C'est un second cas de risque lié aux paramètres de pression et à l'itinéraire prévu. En effet, si l'itinéraire est modifié pour un itinéraire ne comportant aucune portion à vitesse élevée, ce risque pourrait être réduit ou éliminé.

Le troisième cas est axé sur la vitesse de roulage le long de l'itinéraire prévu. De nombreux véhicules comportent des indications de pression recommandée qui varient en fonction de la vitesse. Par exemple, pour certains véhicules, le seuil de pression recommandée peut varier de 300 mbar entre les valeurs extrêmes recommandées. Ainsi, en fonction des valeurs de pression réelles mesurées et des données d'un itinéraire comportant au moins une portion à vitesse élevée, une situation de sous-gonflage peut survenir pour cette portion d'itinéraire. Si tel est le cas, le mode pré-alerte est alors activé.

Pour effectuer les tests relatifs à ce troisième cas, les données relatives à la pression doivent comporter au moins les informations suivantes : des valeurs de pressions mesurées sur le véhicule à un instant donné (par exemple avant son départ), les données multiples de pressions recommandées pour les pneumatiques du véhicule en fonction de la vitesse dudit véhicule.

Les données relatives à un itinéraire à effectuer doivent pour leur part comporter au moins les informations suivantes : la valeur de la vitesse du tronçon le plus rapide de l'itinéraire.

Enfin, selon ce troisième cas, le test permet de vérifier qu'on retrouve une condition de pré-alerte si l'itinéraire prévu comporte au moins une portion de trajet pour laquelle la valeur de pression recommandée est supérieure à la valeur mesurée pour au moins un des pneumatiques du véhicule prévu pour effectuer l'itinéraire. Une marge peut éventuellement être appliquée, pour éviter un regonflage si l'écart de pression est minime.

C'est un troisième cas de risque lié aux paramètres de pression et à l'itinéraire prévu. En effet, si l'itinéraire est modifié pour un itinéraire ne comportant aucune portion à vitesse élevée, ce risque pourrait être réduit ou éliminé.

Enfin, le quatrième cas concerne un mode de déséquilibre de pression sur un même essieu. Dans ce cas, tous les pneumatiques peuvent avoir des valeurs de pression conformes aux valeurs recommandées. En revanche, si un écart de valeur de pression entre les deux pneumatiques d'un même essieu excède un seuil donné, (par exemple de 150 à 200 mbar ou plus, soit environ 8 à 10 % de la valeur de pression nominale), le mode de pré-alerte est activé pour tout itinéraire comportant une portion à vitesse élevée (par exemple 110 km/h ou plus et de préférence 130 km/h). Le risque sous-jacent à ce cas consiste en ce que la paire de pneumatiques en déséquilibre de pression soit à l'origine d'un comportement inhabituel du véhicule. Par exemple, un déséquilibre des pressions peut entraîner une tendance du véhicule à aller d'un côté ou de l'autre, en fonction de la configuration et du niveau plus ou moins élevé de ce déséquilibre. C'est en effet à haute vitesse que l'écart de pression a un impact le plus élevé sur le comportement du véhicule. Ce dernier peut avoir tendance à « tirer » à gauche ou à droite selon le cas.

Pour effectuer les tests relatifs à ce quatrième cas, les données relatives à la pression doivent comporter au moins les informations suivantes : éventuellement les valeurs mesurées de pression des deux pneumatiques d'un même essieu, une valeur de l'écart, à un instant donné (par exemple avant le départ du véhicule) entre les valeurs des pressions de deux pneumatiques d'un même essieu, au moins une valeur d'écart maximum EM donné.

Les données relatives à un itinéraire à effectuer doivent pour leur part comporter au moins les informations suivantes : la valeur de la vitesse du tronçon le plus rapide de l'itinéraire.

Enfin, selon ce quatrième cas, le test permet de vérifier qu'on retrouve une condition de pré-alerte si l'écart établi est supérieur à une valeur d'écart maximum EM donné, et que l'itinéraire prévu comporte au moins une portion de trajet sur une route dont la vitesse de circulation est sensiblement élevée (de préférence supérieure à 80 km/h, et encore plus préférentiellement supérieure à 90 km/h).

C'est un quatrième cas de risque lié aux paramètres de pression et à l'itinéraire prévu. En effet, si l'itinéraire est modifié pour un itinéraire ne comportant pas de portion à vitesse élevée, ce risque pourrait être réduit ou éliminé.

Dans tous ces cas, le mode pré-alerte permet de prévenir le conducteur avant qu'il ne s'engage dans l'itinéraire prévu. Il a ainsi la possibilité d'apporter les correctifs nécessaires avant son départ pour éviter de se retrouver dans une situation qui, dans plusieurs cas, nécessiterait ensuite une action pressante du conducteur.

Selon une variante de réalisation, un module de calcul d'itinéraire permet d'indiquer au conducteur un itinéraire modifié permettant de se diriger, en cas de besoin, vers une station de gonflage, notamment pour les deux premiers cas évoqués.

Dans ces différents exemples de réalisation, on peut également prévoir des seuils maxima de valeurs de sous-gonflage ou de taux de perte de pression correspondant à ceux usuellement utilisés par les systèmes de surveillance de la pression. Lorsque ces seuils sont franchis, on remplace les conditions de pré-alerte, qui correspondent à des conditions pendant lesquelles le véhicule peut rouler, par des conditions d'alertes, nécessitant une action de correction telle que regonflage ou réparation avant d'effectuer un nouveau trajet.

## Revendications

1. Procédé de détermination de pré-alerte pour un véhicule destiné à effectuer un itinéraire prévu, dans lequel :
- on prévoit des moyens de traitement de données disposant d'un module de test ;
- on prévoit des moyens permettant l'obtention, pour ledit véhicule, de données relatives à la pression pour au moins un des pneumatiques ;
- on fournit auxdits moyens de traitement de données lesdites données relatives à la pression;
- on fournit aux moyens de traitement de données un ensemble de critères permettant de détecter des conditions de pré-alerte d'état de pression,
ledit procédé étant **caractérisé en ce que** :
- on fournit également aux moyens de traitement de données certaines caractéristiques physiques relatives à l'itinéraire prévu à effectuer ;
- lesdits critères permettant de détecter des conditions de pré-alerte d'état de pression prennent en compte d'une part lesdites données relatives à la pression et d'autre part lesdites caractéristiques physiques relatives audit itinéraire prévu et établi ;
- de sorte que, sur la base dudit itinéraire établi, desdites données relatives à la pression et desdits critères de pré-alerte, on effectue, à l'aide des moyens de traitement des données, un test permettant de déceler une éventuelle condition de pré-alerte d'état de pression ;
- en cas de détection d'une condition de pré-alerte, on transmet un signal correspondant.

2. Procédé de détermination de pré-alerte selon la revendication 1, dans lequel :
- lesdites données relatives à la pression comprennent au moins une valeur de pression recommandée pour les pneumatiques du véhicule prévu pour effectuer l'itinéraire, une donnée relative à la présence ou non d'une fuite pour au moins un des pneumatiques du véhicule, et, en cas de fuite, la valeur du taux de perte de pression du pneumatique concerné et la valeur de pression mesurée à un instant donné ;
- lesdites données relatives à un itinéraire à effectuer comprennent au moins la distance et/ou la durée prévus de l'itinéraire ;
et dans lequel on retrouve une condition de pré-alerte si une fuite est présente et si l'itinéraire prévu comporte une distance ou un temps de parcours suffisant pour permettre à la valeur de pression dudit pneumatique d'atteindre pendant la réalisation de l'itinéraire une valeur inférieure au seuil de pression minimum recommandé.

3. Procédé de détermination de pré-alerte selon l'une des revendications 1 et 2, dans lequel :
- les données relatives à la pression comprennent une donnée relative à la présence ou non d'une fuite pour au moins un des pneumatiques du véhicule prévu pour effectuer l'itinéraire ;
- lesdites données relatives à un itinéraire à effectuer comprennent au moins la valeur de la vitesse du tronçon le plus rapide de l'itinéraire ;
et dans lequel on retrouve une condition de pré-alerte si une fuite est présente et si l'itinéraire prévu comporte au moins une portion de trajet sur une route dont la vitesse de circulation est sensiblement élevée.

4. Procédé de détermination de pré-alerte selon l'une des revendications 1 à 3, dans lequel :
- les données relatives à la pression comprennent des valeurs de pressions mesurées sur le véhicule à un instant donné, des données multiples de pressions recommandées pour les pneumatiques du véhicule en fonction de la vitesse dudit véhicule ;
- lesdites données relatives à un itinéraire à effectuer comprennent au moins la valeur de la vitesse du tronçon le plus rapide de l'itinéraire ;
et dans lequel on retrouve une condition de pré-alerte si l'itinéraire prévu comporte au moins une portion de trajet pour laquelle la valeur de pression recommandée est supérieure à la valeur mesurée pour au moins un des pneumatiques du véhicule prévu pour effectuer l'itinéraire.

5. Procédé de détermination de pré-alerte selon la revendication 4, dans lequel on retrouve une condition de pré-alerte si l'itinéraire prévu comporte au moins une portion de trajet pour laquelle la valeur de pression recommandée est supérieure à la valeur mesurée d'un moins une valeur de transition donnée.

6. Procédé de détermination de pré-alerte selon l'une des revendications 1 à 5, dans lequel :
- les données relatives à la pression comprennent une valeur de l'écart, à un instant donné entre les valeurs des pressions de deux pneumatiques d'un même essieu, au moins une valeur d'écart maximum (EM) donné ;
- lesdites données relatives à un itinéraire à effectuer comprennent au moins la valeur de la vitesse du tronçon le plus rapide de l'itinéraire ;
et dans lequel on retrouve une condition de pré-alerte si l'écart établi est supérieur à une valeur d'écart maximum (EM) donné, et que l'itinéraire prévu comporte au moins une portion de trajet sur une route dont la vitesse de circulation est sensiblement élevée.

7. Procédé de détermination de pré-alerte selon l'une des revendications 1 à 6, dans lequel on utilise un dispositif mobile monté dans un véhicule et comportant un microprocesseur, ledit dispositif étant agencé pour recevoir lesdites données relatives à la pression, et, sur la base d'un itinéraire donné, d'effectuer un test de pré-alerte.

8. Procédé de détermination de pré-alerte selon l'une des revendications 1 à 6, dans lequel on utilise un dispositif de calcul comportant un microprocesseur situé hors du véhicule, ledit dispositif étant agencé pour recevoir lesdites données relatives à la pression, et, sur la base d'un itinéraire donné, d'effectuer un test de pré-alerte.

9. Procédé de détermination de pré-alerte selon l'une des revendications 1 à 8, prévu pour utilisation avec un système de réseau routier numérique stocké sur un support mémoire et comportant une pluralité d'éléments de réseau tels que des noeuds et/ou tronçons et d'indications de positionnement de ces noeuds et/ou tronçons, lesdits éléments étant susceptibles d'une part d'être agencés dans une reconstitution d'un réseau routier de façon à former des portions de routes et des carrefours, et d'autre part de permettre de déterminer, à l'aide des moyens de traitement de données, au moins un itinéraire potentiel, susceptible de relier un point de départ D, et un point d'arrivée A.

## Patentansprüche

1. Verfahren zur Bestimmung einer Vorwarnung für ein Fahrzeug, das eine vorgesehene Wegstrecke durchführen soll, wobei:
- Datenverarbeitungseinrichtungen vorgesehen werden, die über ein Testmodul verfügen;
- Einrichtungen vorgesehen werden, die den Erhalt, für das Fahrzeug, von Daten bezüglich des Drucks für mindestens einen der Luftreifen ermöglichen;
- die Daten bezüglich des Drucks an die Datenverarbeitungseinrichtungen geliefert werden;
- eine Einheit von Kriterien an die Datenverarbeitungseinrichtungen geliefert wird, die es ermöglichen, Druckzustands-Vorwarnungsbedingungen zu erfassen,
wobei das Verfahren **dadurch gekennzeichnet ist, dass**:
- ebenfalls bestimmte physikalische Eigenschaften bezüglich der durchzuführenden vorgesehenen Wegstrecke an die Datenverarbeitungseinrichtungen geliefert werden;
- die Kriterien, die es ermöglichen, Druckzustand-Vorwarnungsbedingungen zu erfassen, einerseits die Daten bezüglich des Drucks und andererseits die physikalischen Eigenschaften bezüglich der vorgesehenen und festgelegten Wegstrecke berücksichtigen;
- so dass auf der Basis der festgelegten Wegstrecke, der Daten bezüglich des Drucks und der Vorwarnungskriterien mit Hilfe der Datenverarbeitungseinrichtungen ein Test durchgeführt wird, der es ermöglicht, eine mögliche Druckzustand-Vorwarnungsbedingung zu erkennen;
- im Fall der Erfassung einer Vorwarnungsbedingung ein entsprechendes Signal übertragen wird.

2. Verfahren zur Bestimmung einer Vorwarnung nach Anspruch 1, wobei:
- die Daten bezüglich des Drucks mindestens einen empfohlenen Druckwert für die Luftreifen des für die Durchführung der Wegstrecke vorgesehenen Fahrzeugs, einen Wert bezüglich des Vorhandenseins oder nicht eines Lecks für mindestens einen der Luftreifen des Fahrzeugs, und im Fall eines Lecks den Wert des Druckverlustgrads des betroffenen Luftreifens und den gemessenen Druckwert zu einem gegebenen Zeitpunkt enthalten;
- die Daten bezüglich einer durchzuführenden Wegstrecke mindestens die vorgesehene Entfernung und/oder Dauer der Wegstrecke enthalten;
und wobei eine Vorwarnungsbedingung vorgefunden wird, wenn ein Leck vorhanden ist, und wenn die vorgesehene Wegstrecke eine ausreichende Entfernung oder Streckenzeit aufweist, um es dem Druckwert des Luftreifens zu erlauben, während der Durchführung der Wegstrecke einen Wert unter der empfohlenen Mindestdruckschwelle zu erreichen.

3. Verfahren zur Bestimmung einer Vorwarnung nach einem der Ansprüche 1 und 2, wobei:
- die Daten bezüglich des Drucks einen Datenwert bezüglich des Vorhandenseins oder nicht eines Lecks für mindestens einen der Luftreifen des für die Durchführung der Wegstrecke vorgesehenen Fahrzeugs enthalten;
- die Daten bezüglich einer durchzuführenden Wegstrecke mindestens den Wert der Geschwindigkeit des schnellsten Abschnitts der Wegstrecke enthalten;
und wobei eine Vorwarnungsbedingung vorgefunden wird, wenn ein Leck vorhanden ist, und wenn die vorgesehene Wegstrecke mindestens einen Streckenabschnitt auf einer Straße aufweist, dessen Verkehrsgeschwindigkeit deutlich erhöht ist.

4. Verfahren zur Bestimmung einer Vorwarnung nach einem der Ansprüche 1 bis 3, wobei:
- die Daten bezüglich des Drucks zu einem gegebenen Zeitpunkt am Fahrzeug gemessene Druckwerte, viele Daten von empfohlenen Drücken für die Luftreifens des Fahrzeugs abhängig von der Geschwindigkeit des Fahrzeugs enthalten;
- die Daten bezüglich einer durchzuführenden Wegstrecke mindestens den Wert der Geschwindigkeit des schnellsten Abschnitts der Wegstrecke enthalten;
und wobei eine Vorwarnungsbedingung vorgefunden wird, wenn die vorgesehene Wegstrecke mindestens einen Streckenabschnitt aufweist, für den der empfohlene Druckwert höher als der für mindestens einen der Luftreifen des zur Durchführung der Wegstrecke vorgesehenen Fahrzeugs gemessene Wert ist.

5. Verfahren zur Bestimmung einer Vorwarnung nach Anspruch 4, wobei eine Vorwarnungsbedingung vorgefunden wird, wenn die vorgesehene Wegstrecke mindestens einen Streckenabschnitt aufweist, für den der empfohlene Druckwert um mindestens einen gegebenen Übergangswert höher als der gemessene Wert ist.

6. Verfahren zur Bestimmung einer Vorwarnung nach einem der Ansprüche 1 bis 5, wobei:
- die Daten bezüglich des Drucks einen Wert der Abweichung, zu einem gegebenen Zeitpunkt, zwischen den Werten der Drücke von zwei Luftreifen einer gleichen Achse, mindestens einen gegebenen maximalen Abweichungswert (EM) enthalten;
- die Daten bezüglich einer durchzuführenden Wegstrecke mindestens den Wert der Geschwindigkeit des schnellsten Abschnitts der Wegstrecke enthalten;
und wobei eine Vorwarnungsbedingung vorgefunden wird, wenn die festgestellte Abweichung höher als ein gegebener maximaler Abweichungswert (EM) ist, und die vorgesehene Wegstrecke mindestens einen Streckenteil auf einer Straße aufweist, dessen Verkehrsgeschwindigkeit deutlich erhöht ist.

7. Verfahren zur Bestimmung einer Vorwarnung nach einem der Ansprüche 1 bis 6, wobei eine bewegliche Vorrichtung verwendet wird, die in ein Fahrzeug montiert ist und einen Mikroprozessor aufweist, wobei die Vorrichtung eingerichtet ist, um die Daten bezüglich des Drucks zu empfangen und auf der Basis einer gegebenen Wegstrecke einen Vorwarnungstest durchzuführen.

8. Verfahren zur Bestimmung einer Vorwarnung nach einem der Ansprüche 1 bis 6, wobei eine Rechenvorrichtung verwendet wird, die einen außerhalb des Fahrzeugs befindlichen Mikroprozessor aufweist, wobei die Vorrichtung eingerichtet ist, um die Daten bezüglich des Drucks zu empfangen und auf der Basis einer gegebenen Wegstrecke einen Vorwarnungstest durchzuführen.

9. Verfahren zur Bestimmung einer Vorwarnung nach einem der Ansprüche 1 bis 8, das für eine Verwendung mit einem digitalen Straßennetzsystem vorgesehen ist, welches in einem Speicherträger gespeichert ist und eine Vielzahl von Netzelementen wie Knoten und/oder Abschnitte und Positionsanzeigen dieser Knoten und/oder Abschnitte aufweist, wobei die Elemente einerseits in einer Rekonstruktion eines Straßennetzes angeordnet sein, um Straßen- und Kreuzungsteile zu formen, und andererseits erlauben können, mit Hilfe der Datenverarbeitungseinrichtungen mindestens eine potentielle Wegstrecke zu bestimmen, die einen Ausgangspunkt D und einen Ankunftspunkt A verbinden kann.

## Claims

1. Pre-alert determination method for a vehicle intended to make a planned journey, in which:
- data processing means having a test module are provided;
- means are provided to make it possible to obtain, for said vehicle, data relating to pressure for at least one of the tyres;
- said data relating to the pressure are supplied to said data processing means;
- a set of criteria is supplied to the data processing means making it possible to detect pressure state pre-alert conditions,
said method being chararacterized in that:
- certain data relating to the planned journey to be made are supplied to the data processing means;
- said criteria being linked on the one hand to the data relating to pressure and on the other hand to the data relating to said planned and established journey;
- on the basis of said established journey, said data relating to the pressure and said pre-alert criteria, the data processing means are used to perform a test to detect any pressure state pre-alert condition;
- if a pre-alert condition is detected, a corresponding signal is transmitted.

2. Pre-alert determination method according to Claim 1, in which:
- said data relating to pressure comprise at least one pressure value recommended for the tyres of the vehicle intending to make the journey, a datum relating to the presence or otherwise of a leak for at least one of the tyres of the vehicle, and, in the case of a leak, the value of the rate of pressure loss of the tyre concerned and the pressure value measured at a given instant;
- said data relating to a journey to be made comprise at least the planned distance and/or duration of the journey;
and in which a pre-alert condition is found if a leak is present and if the planned journey comprises a travel distance or time that is sufficient to enable the pressure value of said tyre to reach, during the journey, a value less than the recommended minimum pressure threshold.

3. Pre-alert determination method according to one of Claims 1 and 2, in which:
- the data relating to pressure comprise a datum relating to the presence or otherwise of a leak for at least one of the tyres of the vehicle intending to make the journey;
- said data relating to a journey to be made comprise at least the value of the speed of the fastest section of the journey;
and in which a pre-alert condition is found if a leak is present and if the planned journey comprises at least one portion on a road with a fairly high traffic speed.

4. Pre-alert determination method according to one of Claims 1 to 3, in which:
- the data relating to pressure comprise pressure values measured on the vehicle at a given instant, multiple recommended pressure data for the tyres of the vehicle according to the speed of said vehicle;
- said data relating to a journey to be made comprise at least the value of the speed of the fastest section of the journey;
and in which a pre-alert condition is found if the planned journey comprises at least one portion for which the recommended pressure value is higher than the value measured for at least one of the tyres of the vehicle provided to make the journey.

5. Pre-alert determination method according to Claim 4, in which a pre-alert condition is found if the planned journey comprises at least one portion for which the recommended pressure value is greater than the measured value by at least one given transition value.

6. Pre-alert determination method according to one of Claims 1 to 5, in which:
- the data relating to pressure comprise a value of the difference, at a given instant, between the pressure values of two tyres on one and the same axle, at least one given maximum difference value (EM);
- said data relating to a journey to be made comprise at least the value of the speed of the fastest section of the journey;
and in which a pre-alert condition is found if the established difference is greater than a given maximum difference value (EM), and the planned journey comprises at least one portion on a road with a fairly high traffic speed.

7. Pre-alert determination method according to one of Claims 1 to 6, in which a mobile device is used that is mounted in a vehicle and comprises a microprocessor, said device being arranged to receive said data relating to pressure, and on the basis of a given journey, to perform a pre-alert test.

8. Pre-alert determination method according to one of Claims 1 to 6, in which a computation device is used that comprises a microprocessor located outside the vehicle, said device being arranged to receive said data relating to pressure, and, on the basis of a given journey, to perform a pre-alert test.

9. Pre-alert determination method according to one of Claims 1 to 8, designed for use with a digital road network system stored on a memory medium and comprising a plurality of network elements such as nodes and/or sections and positioning indications concerning these nodes and/or sections, said elements being able on the one hand to be arranged in a reconstruction of a road network so as to form portions of road and crossroads, and on the other hand to make it possible to determine, using the data processing means, at least one potential journey, which can link a departure point D and an arrival point A.
